Europäisches Patentamt

European Patent Office

Office européen des brevets

(11) Veröffentlichungsnummer: **0 151 213**

**A1**

(12) **EUROPÄISCHE PATENTANMELDUNG**

(21) Anmeldenummer: **84109011.1**

(22) Anmeldetag: **30.07.84**

(51) Int. Cl.⁴: **C 04 B 35/56**
C 04 B 38/00
//(C04B38/00, 35:56)

(30) Priorität: **30.07.83 DE 3327659**

(43) Veröffentlichungstag der Anmeldung:
**14.08.85 Patentblatt 85/33**

(84) Benannte Vertragsstaaten:
**CH DE FR GB LI SE**

(71) Anmelder: **MTU MOTOREN- UND TURBINEN-UNION MÜNCHEN GMBH**
**Dachauer Strasse 665 Postfach 50 06 40**
**D-8000 München 50(DE)**

(72) Erfinder: **Merz, Herbert**
**Donauwörther Strasse 21**
**D-8000 München 50(DE)**

(54) **Verfahren zur Herstellung eines reaktionsgesinterten Siliciumcarbidkörpers.**

(57) Ein Vorkörper (Halbzeug) umfaßt eine glatte ebene, noch verformbare Folie aus kohlenstoffhaltigem Werkstoff und eine hut-, oder noppenprofilierte weitere Folie aus kohlenstoffhaltigem Werkstoff. Die Folien werden flächig miteinander verbunden. Ein derartiges Halbzeug wird in die gewünschte Endform gebracht und das zusammengesetzte Gebilde nach an sich bekannten Verfahren unter Luftabschluß verkokt, so daß das Kohlenstoffgerüst zurückbleibt. Durch nochmaliges Imprägnieren mit Harz und nachfolgendes Ausbrennen kann nach Bedarf das Gebilde verstärkt werden. Die fertig carbonisierten Teile werden entweder in geschmolzenes metallisches Silizium getaucht oder mit organischen Siliziumverbindungen getränkt oder mit deren Dämpfen begast. Dabei wird Silizium durch Zersetzung abgeschieden und in einem weiteren oder gleichzeitig erfolgenden thermischen Prozeß zur Reaktion C+Si→SiC gebracht.

Fig. 5a

MTU MOTOREN- UND TURBINEN-UNION
MÜNCHEN GMBH

0151213

BEZEICHNUNG GEÄNDERT
siehe Titelseite
München, 27. Juli 1984

---

### Verfahren zur Herstellung eines Verbundkörpers aus Keramik oder faserverstärkter Keramik sowie ein nach diesem Verfahren gefertigtes Sandwich-Gebilde

---

Die Erfindung betrifft ein Verfahren zur Herstellung eines Verbundkörpers aus Keramik oder faserverstärkter Keramik sowie ein nach diesem Verfahren gefertigtes Sandwich-Gebilde.

Zur Herstellung von Gasleit-Bauteilen im Heißgas, von starren Hochtemperatur-Isolationen und Hochtemperatur-Wärmetauschern, die oberhalb der Anwendungstemperaturgrenzen bekannter Metalle betrieben werden sollen, werden keramische Werkstoffe benötigt. Zur Erzielung eines niedrigen Strukturgewichts und hohen Wirkungsgrades pro Bauvolumen müssen solche Körper in Leichtbauweisen mit möglichst dünnen Wandstärken gefertigt werden. Zudem treten hohe Temperaturdifferenzen, d.h. Wärmedehnungen zwischen Heiß- und Kaltseite bzw. Kaltgas- und Heißgaskanälen auf. Außerdem müssen zumindest die Trennwände zwischen Heiß- und Kaltgas druckdicht trotz der geringen Wandstärke sein.

Bekannt sind nach dem Stand der Technik als nichtmetallische Isolationen z.B. Oxid- bzw. Silikatkeramiken, meist in massiver Plattenform, seltener in Form von Sandwich-Platten aus versinterten Faserfilzen mit glasierten Deckplatten (vgl. z.B. Hitzeschild-Kacheln des Space Shuttle-Raum- und

ESP-741

Wiedereintrittskörpers). Derartige Isolationen sind bis ca. 1000°C oxidations- und wärme-, aber nur in sehr geringem Maße thermoschockbeständig.

Als nichtmetallische Isolationen kennt man ferner Hochtemperatur-Graphitisolationen aus starren und/oder flexiblen Schalen oder Folien mit C-Faser-Filzzwischenlagen. Diese sind zwar hochtemperatur- und thermoschockbeständig, jedoch über ca. 400°C nur unter Vakuumbedingungen einsetzbar, d.h. nicht thermooxidationsbeständig. Sämtliche vorgenannten Materialien sind für Wärmetauscher nicht einsetzbar.

Als nichtmetallische Wärmetauscher verwendet man nach dem Stand der Technik Körper aus extrudiertem, d.h. stranggepreßtem oder geschlickertem Material mit axial sich erstreckenden runden oder wabenartigen Kanälen. Die Kanalwandstärken sind herstellungsbedingt entweder relativ dick oder alternativ vergleichsweise dünn und nicht gasdicht. Außerdem können sie wegen mangelnder Beständigkeit gegen Wärmespannungen nicht im kontinuierlichen Gegenstrom, sondern nur als Rekuperator mit geringem Wirkungsgrad betrieben werden (Leckage in der Stirnabdichtung).

Auch kennt man Rohrbündelwärmetauscher aus extrudierten Keramikrohren. Diese können im kontinuierlichen Querstrom betrieben werden, aber die Wandstärke der Rohre ist herstellungsbedingt groß, der Tauschwirkungsgrad ist gering. Außerdem ist die druckdichte Verbindung der Keramikrohre mit den Abschlußböden problembehaftet, und die Druckverluste der Querstromwärmetauscher hoher Bündelzahl sind sehr hoch.

Aufgabe der Erfindung ist die Schaffung eines Verfahrens zur Herstellung eines Verbundkörpers aus Keramik oder faserverstärkter Keramik, bei dem der gefertigte Verbundkörper bei geringer Strukturdichte und hoher Wärme- und Oxidationsbeständigkeit ein sehr geringes Gewicht aufweist

ESP-741

und dennoch gasdicht und vergleichsweise steif ist, und zwar mit einfachen technischen Herstellmitteln.

Gelöst wird die der Erfindung zugrunde liegende Aufgabe dadurch, daß zumindest eine noch verformbare ebene erste Folie aus kohlenstoffhaltigem Werkstoff und eine noch verformbare regelmäßig profilierte zweite Folie aus kohlenstoffhaltigem Werkstoff flächig so aufeinander angeordnet werden, daß sich Hohlräume bzw. Hohlkanäle ausbilden und die Folien verbunden werden, daß das entstandene Foliengebilde in eine gewünschte Endform gebracht und dann ausgehärtet wird, und daß nach dem Aushärtungsvorgang des folienverklebten Gebildes in der gewünschten Endform ein Ausbrenn- und Verkokungsvorgang unter Luftabschluß bzw. unter Inertgas erfolgt, und daß nach einem Verkokungsvorgang das Gebilde in ein geschmolzenes Siliziumbad getaucht oder mit organischen Siliziumverbindungen getränkt oder Dämpfen begast wird, und daß anschließend das Gebilde bis zur Ausbildung von Siliziumcarbid gebrannt wird. Vorzugsweise erfolgt die Verbindung der Folien durch Verschweißen oder Verkleben. Der Ausbrenn- und Verkokungsvorgang soll zwischen 600 und 1000 °C stattfinden. Das Brennen zur Ausbildung von Siliziumcarbid erfolgt vorzugsweise bei 1350 bis 1800 °C. Die zweite Folie weist Hut-, Trapez-, Well-, oder Noppenform auf.

Die so entstandenen dünnwandigen, leichten Sandwich-Körper oder Gebilde bestehen somit in allen Teilen aus hochtemperatur-oxidationsbeständigem, thermoschockunempfindlichen Siliziumcarbid oder aus faserverstärktem Siliziumcarbid, wenn als Folienausgangsmaterial ein faserverstärktes Folienmaterial verwendet wird.

Vorteilhafterweise wird dem Ausbrenn- und Verkokungsvorgang ein Harzimprägnierungsvorgang mit einem weiteren Ausbrenn- und Verkokungsvorgang angeschlossen.

In der Grundform eines Gebildes ist eine einzige ebene bzw. plattige Folie zusammen mit einer profilierten angrenzenden Folie vorgesehen. Die Weiterbildung der Erfindung kann noch eine dritte noch verformbare Folie

ESP-741

auf der anderen Seite der noch verformbaren profilierten zweiten Folie flächig angeordnet und verklebt oder verschweißt werden, bevor der Aushärtungsvorgang bzw. Abscheidungsvorgang in Siliziumcarbid in der Endform des Gebildes eingeleitet wird. Mehrere verklebte oder verschweißte Foliengebilde können zweckmäßigerweise zueinander ausgerichtet oder kreuzweise aufeinandergelegt werden und anschließend mit einem kohlenstoffhaltigen Kleber verklebt oder verschweißt werden bevor der Aushärtungsvorgang in der Endform eingeleitet wird. Ein derartiges Gebilde wird also in die gewünschte Endform gebracht, bevor der Aushärtungsvorgang bzw. Abscheidungsvorgang und Umwandlungsvorgang zum Siliziumcarbid eingeleitet wird.

Vorteilhafterweise findet als Folienwerkstoff eine kohlenstoffreiche Thermo- oder Duroplastfolie Verwendung, deren Kohlenstoffgehalt vorzugsweise 50 % - 65 % Gew. des Folienwerkstoffs beträgt.

Es kann aber auch als Folienwerkstoff ein organischer Faserwerkstoff, z. B. Papier, Vlies, Textil oder Filz, verwendet werden, der mit einem geeigneten kohlenstoffreichen Harz getränkt ist, z. B. Teer, Phenolharz oder dergleichen, dessen Kohlenstoffanteil 60 % bis 80 % Gew. beträgt.

Nicht nur ein organischer, sondern auch ein nichtorganischer Faser-Werkstoff kann für die Folien verwendet werden, z. B. ein Gewebe, Gelege, Vlies oder Filz. Vorzugsweise sind Kohlenstoff- oder Siliziumcarbid-Fasern vorgesehen, die mit kohlenstoffreichem Harz imprägniert werden.

Zweckmäßig ist es, wenn dem zur Folienherstellung verwendeten Thermo- oder Duroplastwerkstoff bzw. dem Tränk-

ESP-741

- 5 -

harz bereits Anteile von Siliziumcarbidpulver beigemengt werden. Derartige Anteile stören nicht beim Verkokungsprozeß, erhöhen jedoch wunschgemäß den Keramikanteil.

Dem thermo- oder duroplastischen Folienwerkstoff können
vorteilhafterweise auch Kurzfasern organischer oder anorganischer Natur zugemischt werden. Besonders geeignet sind
kohlenstoffreiche Kurzfasern, Kohlekurzfasern oder
Siliziumcarbid-Kurzfasern.

Vorzugsweise wird der thermo- oder duroplastische Folienwerkstoff auf ein organisches oder anorganisches Gewebe,
Gelege bzw. Vlies oder Papier ein- oder beidseitig aufkaschiert, bevor die Formgebung zu den ebenen Folien bzw.
profilierten Folien erfolgt.

Ein erfindungsgemäß gefertigtes Keramikgebilde kennzeichnet sich dadurch, daß es vielseitig als Bauteil beispielsweise für Verbrennungsmotoren, Gasturbinen, Raketen-Motoren, Ofenanlagen einsetzbar ist, und zwar für festigkeits-
oder steifigkeitsbestimmte Heißbauteile, für Isolationszwecke, Gasführungszwecke und/oder Wärmeübertragungszwecke
oder als Träger für Reaktionskatalysatoren.

Typische Heißgasbauteile im Triebwerkbau, die mit Vorteil
nach diesem Verfahren hergestellt werden können, sind z. B.
Brennkammern, Turbinenleitschaufeln, Nachbrennerflammhalter-
Strukturen, Nachbrenner-Rohre, Schubdüsenklappen resp.
vektorgesteuerte Schubdüsen.

Die erfindungsgemäße Herstellung derartiger thermisch,
mechanisch und korrosiv hochbeanspruchter Leichtbauteile
in ungekühlter Konfiguration kann angesichts der hohen
Verbrennungstemperaturen künftiger Gasturbinentriebwerke

ESP-741

zu beträchtlichen Wirkungsgraderhöhungen und damit Treibstoffeinsparungen führen.

Auch Isolationshauben für heißisostatisches Pressen und Heißpressen oder Schutzgas-Wärmebehandlungsanlagen können erfindungsgemäß in einer Sandwich-Bauweise gefertigt werden.

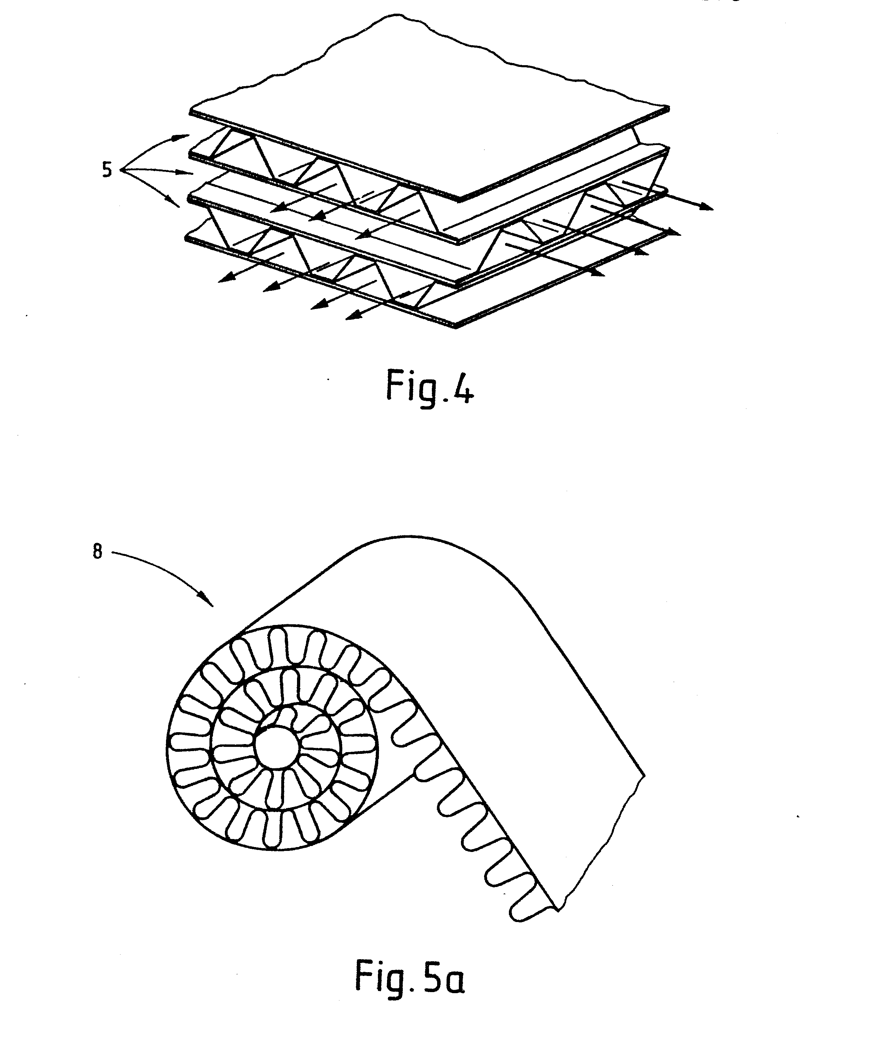

Erfindungsgemäß gefertigte Wärmetauscher oder Katalysatorträgerkörper sind auf einfache Weise herstellbar. Die Wärmetauscher bestehen aus Halbzeug-Grundkörpern gleichen Aufbaus. Durch unterschiedliche Anordnung der einzelnen Grundkörper ergibt sich entweder ein nach dem Gegenstromprinzip arbeitender Wärmetauscher oder ein Querstrom-Wärmetauscher. Die Katalysatorträgerkörper können wie in Fig. 5a gewickelt werden.

Durch die Erfindung ergeben sich im gefertigten Bauteil zumeist parallel zueinander verlaufende gasdichte Isolations- bzw. Trennebenen. Desgleichen ist das Bauteil an seiner Oberfläche relativ glatt, wodurch eine große Wärmerückstrahlung erfolgt bzw. geringe Strömungsdruckverluste auftreten. Der Aufbau ist insgesamt so getroffen, daß Wärmedehnungen nach allen Richtungen über elastisch verformbare Strukturglieder aufgefangen werden können. Ersichtlich ergibst sich mithin ein billiges Herstellverfahren bei vielseitiger Anwendbarkeit der gefertigten Gegenstände.

Bei einem bevorzugten Ausführungsbeispiel des erfindungsgemäßen Verfahrens wird der Harzimprägnierungsvorgang und nachfolgende Verkokungsvorgang (ensprechend Patentanspruch 2) ein- oder mehrmals wiederholt, um den Kohlenstoffgehalt bzw. die Dichte in dem endgültigen Foliengebilde zu erhöhen. Für den Harzimprägnierungsvorgang sind folgende kohlenstoffhaltige Materialien
besonders geeignet:
Bakelit EP 60/65 °C
Phenolharze: Bakelit Fw 247, 433, 435
Phenolharz:  Bakeli 7912 FL
Polyiimidharze: Technochemie H 795, H 800.

Bei Verwendung dieser Materialien beginnt die Verkokung
bei etwa 350 °C und reicht bis etwa 800 °C.

Die Erfindung wird nachfolgend anhand von Ausführungsbeispielen unter Bezugnahme auf die Zeichnung näher beschrieben; es zeigen:

Fig. 1  ein erfindungsgemäß gefertigtes Halbzeug in perspektivischer Ansicht mit einem Trapezprofil der
        profilierten Folie,

Fig. 2  eine der Fig. 1 ähnliche perspektivische Ansicht
        eines anderen Halbzeugs mit einer wellprofilierten Folie,

Fig. 3  zwei nach Fig. 2 gefertigte Gebilde in zusammengesetzer Anordnung mit einer weiteren ebenen Zwischenfolie,

Fig. 4  eine der Fig. 3 ähnliche perspektivische Ansicht zusammengesetzter Gebilde nach
        Fig. 1,

ESP-741

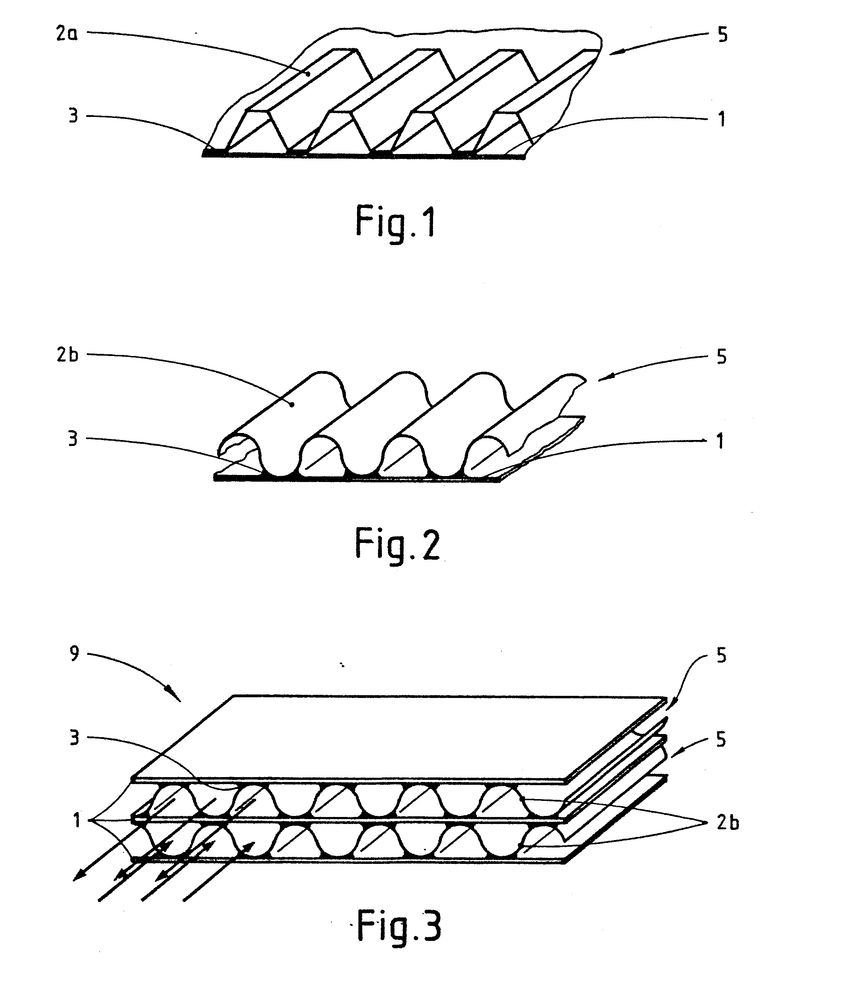

Fig. 5a das in Fig. 2 gezeigte Gebilde in aufgerolltem Zustand zwecks Verwendung für ein Gasleit- oder Isolierrohr oder einen Rekuperator-Wärmetauscher oder
einen Katalysator-Trägerkörper,

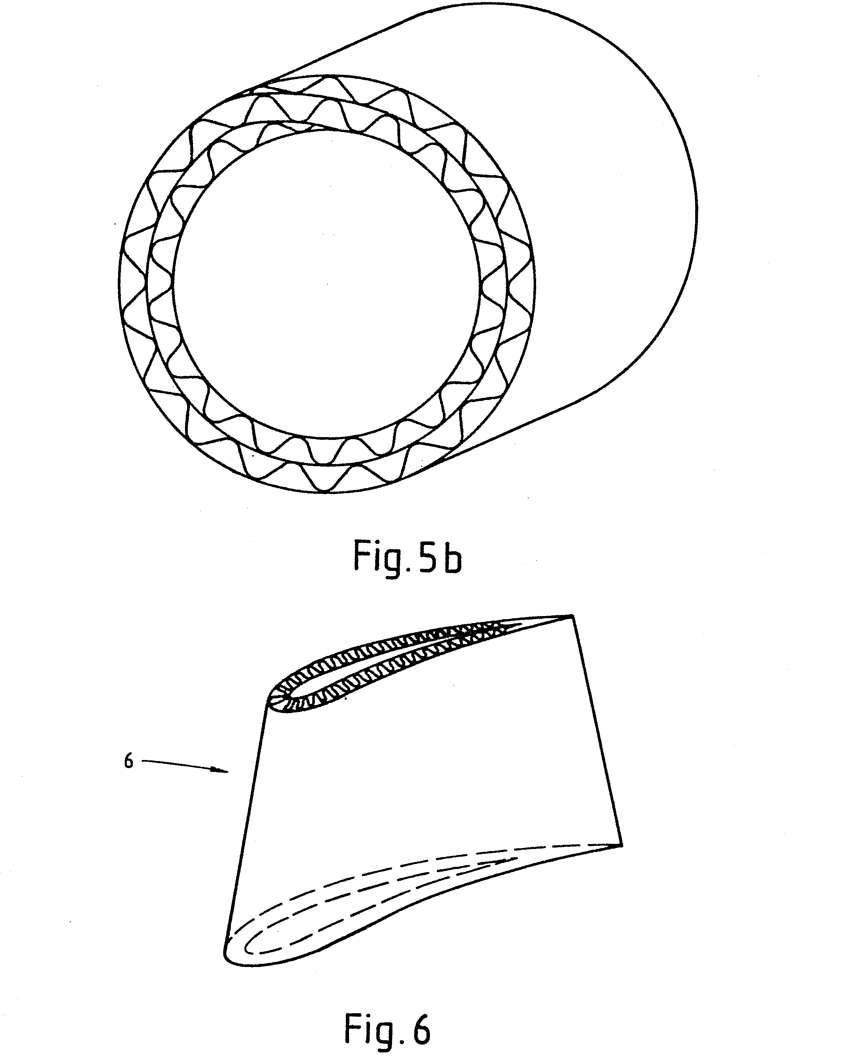

Fig. 5b ein der Fig. 5a ähnliches Gebilde mit zylindrischem
Hohlraum zwecks Verwendung für ein Gasleit- oder
Brennerrohr,

Fig. 6 einen Leitschaufelkörper mit der Grundstruktur eines
Gebildes nach Fig. 2, wobei eine weitere ebene Folie
vorgesehen ist, und

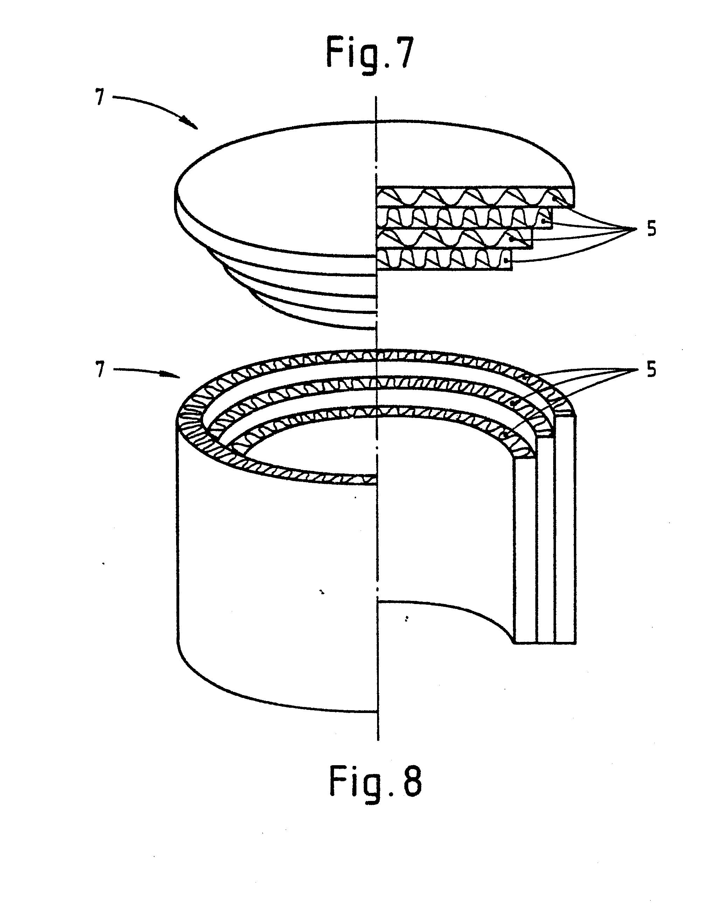

Fig. 7 und 8 Deckel und Zylinder einer Isolationshaube in
Sandwich-Bauweise mit einem Grundmaterial nach Fig. 2.

In den Figuren 1 und 2 sind Vorkörper (Halbzeug) erfindungsgemäß gefertigter Gegenstände gezeigt.

Grundsätzlich umfaßt das Halbzeug eine ebene Folie 1 sowie eine profilierte Folie 2a bzw. 2b. Beide Folien 1,
2a bzw. 2b liegen dicht aufeinander und werden mit einem
stark kohlenstoffhaltigen Kleber 3 (z.B. Phenolharz) verklebt oder verschweißt und sind vorzugsweise nicht voll
ausgehärtet.

Die noch verformbare bzw. nicht voll ausgehärtete ebene
Folie 1 weist eine glatte Oberfläche auf. Die profilierte
Folie 2a besitzt Trapezform, die profilierte Folie 2b gemäß Fig. 2 Wellprofil. In Sonderfällen kann die profilierte Folie auch "Eierkarton"-Struktur aufweisen (Noppen- oder
Hutform).

Beide Folien 1 und 2a bzw. 2b bestehen entweder aus einem
bereits stark kohlenstoffhaltigem Papier oder sind stark
kohlenstoffhaltige sonstige unverstärkte oder faserver- stärkte Folien, z.B. mit Teer oder Phenolharzen getränkte
organische oder anorganische (z.B. C-Faser oder SiC-Faser-)
ca. 0,5 mm dicke Vliese, Gewebe oder Gelege, die vorzugsweise nur vorgehärtet und nicht voll ausgehärtet sind.

Zuschnitte aus diesem Halbzeug werden nun in geeigneter
Weise angeordnet:

Gemäß Fig. 3 sind Halbzeuge nach Fig. 2 mit einer weiteren
glatten Folienhaut 1 (dritte Folie) versehen und als Wellprofile parallel
zueinander geschichtet und miteinander mittels kohlenstoffhaltigem Kleber 3 verklebt. Derartig zusammengesetzte Gebilde 5 eignen sich z.B. für einen Wärmetauscher im Gegenstromprinzip.

Gebilde 5 bzw. Zuschnitte eines Halbzeugs nach Fig. 1 können auch unter 90° gemäß Fig. 4 gekreuzt aufeinander angeordnet und miteinander verklebt werden. Auch ist ein anderer Kreuzungswinkel denkbar. Die Ausführungsform nach
Fig. 4 eignet sich z.B. für einen Wärmetauscher, der nach
dem Querstromprinzip betrieben wird.

Bevor der vollständige Aus härtungsprozeß, Verkokungsprozeß und Abscheidungsprozeß von Siliziumcarbid durchgeführt
wird, können das oder die Gebilde 5 noch eventuell nach
Bedarf endverformt werden.

Aus parallel miteinander oder mit sich selbst verklebten,
d.h. aufgerollten Wellstreifen gemäß Fig. 5a können vorzugsweise einachsig gekrümmte Bauteile wie z.B. Isolationsrohre oder rekuperative Wärmetauscher 8/oder gemäß Fig. 5b oder Katalysator-Trägerkörper
Gasleit- oder Brennerrohre gefertigt werden.

In Fig. 6 findet das gleiche Halbzeug Verwendung für einen
Leitschaufelkörper 6, der gegebenenfalls gekühlt werden
kann.

Auch zylindrische Schalen gemäß Fig. 8 werden aus demselben Halbzeug gefertigt. Diese sind sehr steif in Achsrichtung (alle Wellstege parallel), aber auch steif gegen Schalenbiegung und -torsion. Derartige Schalen können konzentrisch verlaufen oder aber gemäß Fig. 5 gewickelt sein.

Das Gesamtgebilde nach Fig. 8 bildet zusammen mit dem Deckel gemäß Fig. 7 eine Isolationshaube 7 für eine HIP- oder Heißpreßanlage. Auch der Deckel umfaßt die gleiche Grundstruktur, gefertigt nach dem erfindungsgemäßen Verfahren.

Bi- oder mehrachsig gekreuzte Körper eignen sich vorzugsweise für ebene Plattenkörper und unter besonderen Vorsichtsmaßnahmen können auch ein- oder zweiachsig schwach gekrümmte Bauteile hergestellt werden.

Durch ihren Aufbau aus parallel zueinanderliegenden und über Stegwände gegeneinander abgestützten Platten oder Schalen mit voneinander getrennten Gasvolumina eignen sich Körper dieser Bauart sowohl als Leichtbau-Strukturteile (z.B. Gasturbinenteile im Heißbereich), als auch als starre Isolationskörper, z.B. Isolationshauben 7 bei Hochtemperatur-Wärmebehandlungs- und Preßprozessen (Sinteröfen, heißisostatisches Pressen, isothermes Schmieden). Ein zusätzlicher Vorteil ergibt sich aus der Tatsache, daß Siliziumcarbid im Gegensatz zu Kohlenstoffisolationen sehr reaktionsträge ist.

Die ebenen Folien 1 bilden bei Wärmetauschern die Trennmembranen zwischen Heiß- und Kaltgas. Die profilierten Folien 2 dienen als Stege und stabilisieren mithin die ebenen Folien 1, ermöglichen gleichzeitig jedoch infolge ihrer Schubweichheit den Abbau thermischer Spannungen in den ebenen Folien. Außerdem kanalisieren sie die Gasströme innerhalb der Folienplattenebene ohne größere Druckverluste, und ergeben eine große spezifische Oberfläche, wie sie für Wärmetauscher und Katalysator-Träger vorteilhaft ist.

ESP-741

0151213

ba-fr

MTU MOTOREN- UND TURBINEN-UNION
MÜNCHEN GMBH


München, 27. Juli 1984


Patentansprüche


1. Verfahren zur Herstellung eines Verbundkörpers aus Keramik oder faserverstärkter Keramik, dadurch gekennzeichnet, daß zumindest eine noch verformbare ebene erste Folie (1) aus kohlenstoffhaltigem Werkstoff und eine noch verformbare regelmäßig profilierte zweite Folie (2, 2b) aus kohlenstoffhaltigem Werkstoff flächig so aufeinander angeordnet werden, daß sich Hohlräume bzw. Hohlkanäle ausbilden und die Folien miteinander verbunden werden, daß das entstandene Foliengebilde (5) in eine gewünschte Endform gebracht und dann ausgehärtet wird, daß nach dem Aushärtungsvorgang des Gebildes (5) in der gewünschten Endform ein Ausbrenn- und Verkokungsvorgang unter Luftabschluß bzw. unter Inertgas erfolgt, und daß nach einem Verkokungsvorgang das Gebilde (5) in ein geschmolzenes Siliziumbad getaucht oder mit organischen Siliziumverbindungen getränkt oder mit Dämpfen begast wird, und daß anschließend das Gebilde (5) bis zur Ausbildung von Siliziumcarbid gebrannt wird.


2. Verfahren nach Anspruch 1, dadurch gekennzeichnet, daß dem Ausbrenn- und Verkokungsvorgang ein Harz-


ESP-741

imprägnierungsvorgang mit einem weiteren Ausbrenn-
und Verkokungsvorgang angeschlossen wird.

3. Verfahren nach Anspruch 1 oder 2, dadurch gekennzeichnet, daß eine der ersten Folie ähnliche dritte
noch verformbare Folie auf der anderen Seite der noch
verformbaren profilierten zweiten Folie (2a, 2b)
flächig angeordnet und verklebt oder verschweißt wird,
bevor der Aushärtungsvorgang in der Endform eingeleitet
wird.

4. Verfahren nach Anspruch 1 bis 3, dadurch gekennzeichnet, daß mehrere verklebte oder verschweißte
Foliengebilde (5) zueinander ausgerichtet oder kreuzweise aufeinandergelegt und anschließend mit einem
kohlenstoffhaltigen Kleber verklebt oder verschweißt
werden, bevor der Aushärtungsvorgang in der Endform
eingeleitet wird.

5. Verfahren nach Anspruch 1 bis 4, dadurch gekennzeichnet, daß als Folienwerkstoff eine kohlenstoffreiche
Thermo- oder Duroplastfolie verwendet wird.

6. Verfahren nach Anspruch 5, dadurch gekennzeichnet,
daß der Kohlenstoffgehalt 50 % - 65 % Gew. des
Folienwerkstoffes beträgt.

7. Verfahren nach Anspruch 1 bis 5, dadurch gekennzeichnet, daß faserverstärkte Folien (2a, 2b) als
Ausgangsmaterial verwendet werden.

8. Verfahren nach Anspruch 1 bis 7, dadurch gekennzeichnet, daß als Folienwerkstoff ein organischer
Faserwerkstoff verwendet wird, der mit einem geeigneten kohlenstoffreichen Harz getränkt ist.

ESP-741
27.07.1984

**0151213**

9. Verfahren nach Anspruch 1 bis 7, dadurch gekennzeichnet, daß als Folienwerkstoff ein anorganisches Gewebe, Gelege, Vlies oder Filz, vorzugsweise aus Kohlenstoff- oder Siliziumcarbid-Fasern, verwendet wird, das mit kohlenstoffreichem Harz imprägniert wird.

10. Verfahren nach Anspruch 1 bis 9, dadurch gekennzeichnet, daß dem thermo- oder duroplastischen Folienwerkstoff Kurzfasern organischer oder anorganischer Natur zugemischt werden.

11. Verfahren nach Anspruch 1 bis 9, dadurch gekennzeichnet, daß dem Thermo- oder Duroplastharz bzw. dem Tränkharz bereits Anteile von Siliziumcarbidpulver beigemengt werden.

12. Verfahren nach Anspruch 1 bis 7, dadurch gekennzeichnet, daß der thermo- oder duroplastische Folienwerkstoff auf ein organisches oder anorganisches Gewebe, Gelege bzw. Vlies oder Papier ein- oder beidseitig aufkaschiert wird, bevor die Formgebung zu den ebenen Folien (1) bzw. profilierten Folien (2a, 2b) erfolgt.

13. Verfahren nach den Patentansprüchen 1 bis 12, dadurch gekennzeichnet, daß die regelmäßige Profilierung der Folie Hut-, Trapez-, Well- oder Noppenform aufweist.

14. Ein nach einem Verfahren gemäß 1 bis 13 hergestelltes Sandwich-Gebilde, dadurch gekennzeichnet, daß das Gebilde (5) in der Endform ein steifigkeits- oder festigkeitsbestimmendes Strukturbauteil im Heißgasstrom, z. B. ein Leitschaufelkörper (5) einer Turbine ist.

ESP-741

15. Ein nach einem Verfahren gemäß 1 bis 13 hergestelltes Sandwich-Gebilde, dadurch gekennzeichnet, daß das Gebilde (5) ein nicht-tragendes Gasleitteil ist, z. B. ein Heißgasleitrohr (5) einer Wärmekraftmaschine oder einer Heizungsofenanlage ist.

16. Ein nach einem Verfahren gemäß 1 bis 13 hergestelltes Sandwich-Gebilde, dadurch gekennzeichnet, daß das Gebilde (5) ein Isolierbauteil, z. B. eine Isolationshaube (7) z. B. für heißisostatische Pressen oder Heißpressen oder Schutzgas-Warmbehandlungsanlagen ist.

17. Ein nach einem Verfahren gemäß 1 bis 13 hergestelltes Sandwich-Gebilde, dadurch gekennzeichnet, daß das Gebilde (5) ein Wärmetauscher (9, 10) ist.

18. Ein nach einem Verfahren gemäß 1 bis 13 hergestelltes Sandwich-Gebilde, dadurch gekennzeichnet, daß das Gebilde (5) ein Träger für einen Heißgas-Reaktionskatalysator ist (z. B. zur Abgasentgiftung von Verbrennungsgasen oder zur Reaktion gasförmiger Gemische).

Fig.1

Fig.2

Fig.3

0151213

5

## Fig.4

8

## Fig.5a

3/4

0151213

Fig. 5b

6 →

Fig. 6

## Fig.7

## Fig.8

**0151213**
Nummer der Anmeldung

# EUROPÄISCHER RECHERCHENBERICHT

Europäisches
Patentamt

EP  84 10 9011

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-B- 212 357 (NIPPON OIL SEAL INDUSTRY CO., LTD.) * Ansprüche 1-7 * | 1,2,12 | C 04 B 35/56<br>C 04 B 38/00 //<br>(C 04 B 38/00<br>C 04 B 35/56 ) |
| A | GB-A-1 457 757 (SECRETARY OF STATE FOR DEFENCE) * Anspruch 1 * | | |

RECHERCHIERTE
SACHGEBIETE (Int. Cl. ³)

C 04 B 35/56
C 04 B 38/00

Der vorliegende Recherchenbericht wurde für alle Patentansprüche erstellt.

| Recherchenort BERLIN | Abschlußdatum der Recherche 17-10-1984 | Prüfer STROUD J.G. |
|---|---|---|